# EUROPÄISCHE PATENTSCHRIFT

(11) **EP 3 750 787 B1**
(45) Veröffentlichungstag und Bekanntmachung des Hinweises auf die Patenterteilung: **23.08.2023**
(21) Anmeldenummer: 20175215.1
(22) Anmeldetag: 18.05.2020
(51) Int. Cl.: B62D 35/00, B60J 5/10

(54) **HECKKLAPPE MIT MECHANISCH GESICHERTER HECK- UND SEITENSPOILERVERBINDUNG**
TAILGATE WITH MECHANICALLY SECURED REAR AND SIDE SPOILER CONNECTION
HAYON ARRIÈRE POURVU DE RACCORDEMENT DE SPOILER ARRIÈRE ET LATÉRAL BLOQUÉ MÉCANIQUEMENT

(30) Priorität: 14.06.2019 DE 102019116206
(43) Veröffentlichungstag der Anmeldung: 16.12.2020
(73) Patentinhaber: Volkswagen AG, 38440 Wolfsburg (DE)
(72) Erfinder: Franke, Sven, 38547 Calberlah (DE); Bösche, Thorben, 38446 Wolfsburg (DE)
(74) Vertreter: Gulde & Partner

(56) Entgegenhaltungen:
- EP-A1- 2 842 842
- EP-A2- 2 436 580
- WO-A1-2015/135661

## Beschreibung

Die Erfindung betrifft eine Heckklappe, welche einen Heckspoiler und einen Seitenspoiler umfasst, die mit einer Basisstruktur der Heckklappe ortsfest verbunden sind.

In der Druckschrift US 2016/0303954 A1 ist eine Aussparung an einer Türaußenverkleidung beschrieben, wobei an einem Heckspoiler ein Stift vorgesehen ist. Der Stift stößt an eine Vorderwand der Aussparung an, wodurch ermöglicht wird, dass der Heckspoiler in Bezug auf eine Klappe in einer Fahrzeug-Front-Heck-Richtung positioniert ist.

Die Druckschrift US 2017/0225548 A1 beschreibt eine Hintertürstruktur für ein Fahrzeug, wobei die Struktur zwei Fensterscheiben, einen Heckspoiler, und einen Hecktürrahmen umfasst, der beide Fensterscheiben und den Heckspoiler trägt. Die beiden Fensterscheiben und Heckspoiler sind miteinander verklebt.

Genannt werden ferner die Druckschriften DE 10 2014 103 541 A1; US 5,013,081 A; US 6,672,651 B1; US 2016/0 272 052 A1 und DE 43 00 114 A1 und EP 2 436 580 A2, die jeweils Spoiler und deren Verbindungsweisen an Heckklappen offenbaren.

Der Erfindung liegt nun die Aufgabe zugrunde, die Position von Spoiler-Anbauteilen an einer Heckklappe sicher zu stellen.

Ausgangspunkt der Erfindung ist eine Heckklappe, welche einen Heckspoiler und einen Seitenspoiler umfasst, die mit einer Basisstruktur der Heckklappe ortsfest verbunden sind. Der Heckspoiler ist gegenüber dem Seitenspoiler und umgekehrt durch eine mechanische Verbindung zusätzlich reversibel gesichert angeordnet. Der Heckspoiler und der Seitenspoiler stehen über ihre Stirnseiten miteinander in Verbindung, wobei die mechanische Verbindung mindestens ein Steckelement und mindestens ein Aufnahmeelement umfasst, die wahlweise im Heckspoiler oder dem Seitenspoiler gegenüberliegend ausgebildet und angeordnet sind.

Erfindungsgemäß ist vorgesehen, dass an einer Stirnseite des Seitenspoilers das mindestens eine Steckelement in einem Bauraum einer schalenartigen Struktur eines äußeren Seitenspoilerelementes ausgebildet ist, wobei das mindestens eine Steckelement mit den Innenwandungen einer aufgespreizten Oberschale des Seitenspoilers verbunden ist, wobei eine innere Tragstruktur des Seitenspoilers mit einem Basisteil des Steckelementes und mit der Oberschale des Seitenspoilers verbunden ist, wobei die innere Tragstruktur des Seitenspoilers mit der Basisstruktur der Heckklappe und das äußere Seitenspoilerelement fest mit der inneren Tragstruktur des Spoilers und über das mindestens eine Steckelement mit dem Heckspoiler verbunden sind, da das mindestens eine Steckelement des Seitenspoilers in eine Aufnahmeöffnung des Aufnahmeelementes innerhalb des Heckspoilers eingreift.

Bevorzugt ist das mindestens eine Steckelement im Seitenspoiler und das mindestens eine Aufnahmeelement im Heckspoiler angeordnet.

Bevorzugt ist vorgesehen, dass mindestens ein Steckelement in ein äußeres Seitenspoilerelement integriert angeordnet ist.

Das Spoilerelement weist die innere Tragstruktur auf.

Diese innere Tragstruktur ist mit der Heckklappe verbunden, wobei das äußere Seitenspoilerelement in einem Zusammenbauzustand fest mit der inneren Tragstruktur des Spoilers und erfindungsgemäß über das mindestens eine Steckelement mit dem Heckspoiler verbunden ist, da das mindestens eine Steckelement des Seitenspoilers im Zusammenbauzustand in die Aufnahmeöffnung des Aufnahmeelementes des Heckspoilers eingreift, wie in der Beschreibung näher erläutert ist.

In bevorzugter Ausgestaltung der Erfindung ist in einer ersten Ausführungsvariante das mindestens eine Aufnahmeelement eine von einem äußeren Heckspoilerelement des Heckspoilers orthogonal abgestellte Aufnahmelasche.

Die orthogonal abgestellte Aufnahmelasche weist die Aufnahmeöffnung auf, wobei das äußere Heckspoilerelement mit der inneren Tragstruktur des Heckspoilers verbunden ist, die mit der inneren Tragstruktur der Heckklappe und erfindungsgemäß über die Aufnahmeöffnung mit dem Seitenspoiler verbunden ist, da das Steckelement des Seitenspoilers in die Aufnahmeöffnung des äußeren Heckspoilerelementes eingreift.

In einer anderen bevorzugten Ausgestaltung ist in einer zweiten Ausführungsvariante das mindestens eine Aufnahmeelement als Aufnahmeöffnung ausgebildet, welches in einem orthogonal abgestellten Rand der inneren Tragstruktur des Heckspoilers angeordnet ist.

Die Erfindung wird nachfolgend anhand der zugehörigen Zeichnungen erläutert. Es zeigen:
- Figur 1: eine perspektivische Darstellung einer Heckklappe umfassend einen Seitenspoiler und einen Heckspoiler;
- Figur 1A: eine vergrößerte perspektivische Darstellung einer Tragstruktur des Seitenspoilers, die in einer ersten Befestigungsart an einer Basisstruktur der Hecklappe befestigt ist, wobei in Figur 1A eine Schnittlinie A-A eingezeichnet ist;
- Figur 1B: eine Schnittdarstellung gemäß der Schnittlinie A-A in Figur 1A einer mechanischen Sicherung des Seitenspoilers gegenüber dem Heckspoiler in einer ersten Ausführungsvariante;
- Figur 1C: eine Schnittdarstellung der mechanischen Sicherung des Seitenspoilers gegenüber dem Heckspoiler in der ersten Ausführungsvariante;
- Figur 2A: eine vergrößerte perspektivische Darstellung einer Tragstruktur des Seitenspoilers, die einer zweiten Befestigungsart an einer Basisstruktur der Hecklappe befestigt ist, wobei in Figur 2A eine Schnittlinie B-B eingezeichnet ist;
- Figur 2B: eine Schnittdarstellung gemäß der Schnittlinie B-B in Figur 2A einer mechanischen Sicherung des Seitenspoilers gegenüber dem Heckspoiler in einer zweiten Ausführungsvariante;
- Figur 2C: eine Schnittdarstellung der mechanischen Sicherung des Seitenspoilers gegenüber dem Heckspoiler in der zweiten Ausführungsvariante.

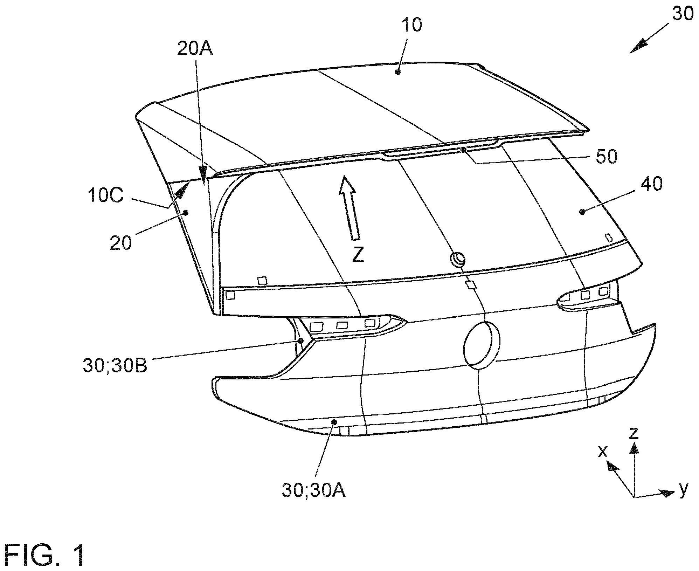

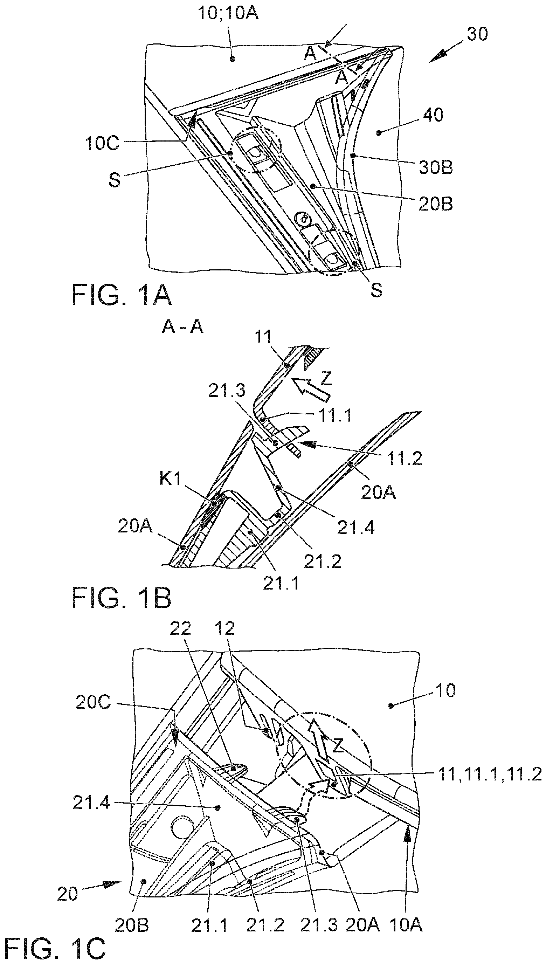

Die Figur 1 zeigt in einer perspektivischen Ansicht eine Heckklappe 30 von ihrer Außenseite. In bekannter Weise weist die Heckklappe 30 eine Basisstruktur 30B auf, auf der verschiedene Komponenten befestigt werden. Zum einen ist die Außenstruktur, insbesondere das in Figur 1 gezeigte Außenblech als äußeres Heckklappenelement 30A der Heckklappe 30 auf der Basisstruktur 30B befestigt. Aus Figur 1 wird zum anderen deutlich, dass an der Basisstruktur 30B eine Heckscheibe befestigt ist.

Seitlich der Heckscheibe 40 sind bei einigen Fahrzeugen zusätzlich Seitenspoiler 20 angeordnet, an die oberhalb eines Heckspoilers 10 angrenzt. Schließlich ist ein Heckspoiler 10 an der Basisstruktur 30B befestigt.

Insgesamt umfasst die Heckklappe 30 somit die Basisstruktur 30B der Hecklappe 30A, die Außenstruktur 30A der Hecklappe 30A, die Heckscheibe 40, die Seitenspoiler 20 und den Heckspoiler 10.

In einer herkömmlichen Zusammenbauweise der Heckklappe 30 grenzt eine Stirnseite 10C (vergleiche Figuren 1 und 1A) des Heckspoilers 10 an eine gegenüberliegende Stirnseite 20C (vergleiche Figur 1C) der Seitenspoiler 20 an.

Der dem in Figur 1 gezeigten Seitenspoiler 20 in horizontaler Richtung gesehen gegenüberliegende Seitenspoiler ist durch die perspektivische Darstellung gemäß Figur 1 nicht sichtbar.

Bei der herkömmlichen Zusammenbauweise besteht zwischen den Stirnseiten 10C, 20C des Heckspoilers 10 mit den Seitenspoilern 20 keine Verbindung.

Die Seitenspoiler 20 und der Heckspoiler 10 sind für sich separat an der Basisstruktur 30B der Heckklappe 30 befestigt. Der Heckspoiler 10 umfasst analog zu dem Seitenspoiler 20 ebenfalls eine äußeres Heckspoilerelement 10A und eine innere Tragstruktur 10B, wobei das äußere Heckspoilerelement 10A ebenfalls bevorzugt mit der inneren Tragstruktur 10B des Heckspoilers verklebt ist.

Seitenspoiler 20 und Heckspoiler 10 sind über die inneren Tragstrukturen 20B und 10B mit der Basisstruktur 30B der Heckklappe 30 verbunden.

Die bisherige Zusammenbauweise ohne Verbindung zwischen den Stirnseiten 10C, 20C des Heckspoilers 10 und des/der Seitenspoiler/s 20 hat den Vorteil, dass der Heckspoiler 10 beziehungsweise die Seitenspoiler 20 unabhängig voneinander demontiert werden können, jedoch wird zur Erhöhung der Strukturfestigkeit der Heckklappe 30 und seinen angrenzenden Bauteilen, insbesondere dem an die Seitenspoiler 20 angrenzenden Heckspoiler 10 eine reversibel mechanische Verbindung, im Sinne einer zusätzlichen mechanischen Sicherung vorgeschlagen, die gleichzeitig eine einfache Demontage und Montage der Komponenten 10, 20 ermöglicht, wie nachfolgend detailliert erläutert wird.

Erste Ausführungsvariante:
Die Figur 1A zeigt den oberen Bereich der Basisstruktur 30B der Heckklappe 30, an dem der Seitenspoiler 20 über seine innere Tragstruktur 20B in einer ersten Ausführungsvariante über eine form- und kraftschlüssige Verbindung, insbesondere die mindestens eine Schraubverbindung S von innen, das heißt von der Innenseite der Heckklappe 30 aus, befestigt ist.

Der Seitenspoiler 20 umfasst die innere Tragstruktur 20B, auf der das von außen sichtbare Spoilerelement 20A befestigt, insbesondere verklebt angeordnet ist.

Die innere Tragstruktur 20B des Seitenspoilers 20 ist gemäß Figur 1A mit der Basisstruktur 30B der Heckklappe 30 verschraubt.

In Figur 1A ist zudem die Stirnseite 10C des Heckspoilers 10 erkennbar, da ein äußeres Seitenspoilerelement 20A des Seitenspoilers 20 in Figur 1A zur Verdeutlichung weggelassen ist.

Die Figur 1A zeigt eine Schnittlinie A-A, wobei der zugehörige Schnitt A-A in Figur 1B dargestellt ist.

Erfindungsgemäß ist vorgesehen, den Heckspoiler 10 und den Seitenspoiler 20 über ihre Stirnseiten 10C, 20C miteinander zu verbinden.

Vorgesehen ist, dass durch diese Verbindung eine zusätzliche mechanische Sicherung des Heckspoilers 10 und des Seitenspoilers 20, wenn eine Kraft auf den Heckspoiler 10 oder den Seitenspoiler wirkt, erreicht wird.

Nur beispielsweise wirkt auf die leicht über die Heckscheibe 40 hervorstehende Stirnseite 10C des Heckspoilers 10 mit der zumeist integrierten Heckbeleuchtung 50 (vergleiche Figur 1) in einer Waschstraße durch die rotierenden Reinigungsrollen von unten nach oben in z-Richtung eine in Z (vergleiche Figur 1) wirkende Kraft auf den Heckspoiler 10, der durch die nachfolgend beschriebene mechanische Sicherung reversibel mit dem/den Seitenspoiler/n 20 verbunden wird.

Die Figur 1C zeigt in einer weiteren perspektivischen Darstellung die vorgesehene formschlüssige mechanische Verbindung zwischen Heckspoiler 10 und Seitenspoiler 20, die nachfolgend in einer Zusammenschau mit dem Schnitt A-A gemäß Figur 1B beschrieben wird.

Stirnseitig des Heckspoilers 10, insbesondere in dem äußeren Heckspoilerelement 20A wird ein Aufnahmeelement 11 angeordnet, welches orthogonal zu der Oberfläche des äußeren Heckspoilerelementes 20A des Heckspoilers 10 angeordnet ist und somit in der Stirnfläche 10C des Heckspoilers 10 liegt, welche der Stirnfläche 20C des Seitenspoilers 20 im Zusammenbauzustand gegenüber liegt.

Das Aufnahmeelement 11 ist als Aufnahmelasche 11.1 ausgebildet. Die Aufnahmelasche 11.1 weist eine Aufnahmeöffnung 11.2 auf. Zudem wird nicht nur die Aufnahmelasche 11.1 an der Stirnseite 10C des Heckspoilers 10 orthogonal abgestellt, sondern es wird zudem im äußeren Heckspoilerelement 20A ein Führungselement 12 angeordnet, welches eine zur Basisstruktur 30B der Heckklappe 30 weisende offene Führungsnut 12.1 aufweist.

Im Zusammenbauzustand gegenüberliegend wird an der Stirnseite 20C des Seitenspoilers 20, insbesondere in einem Bauraum des äußeren Spoilerelementes 20A (vergleiche Figur 1B) ein Steckelement 21 ausgebildet, welches somit in der schalenartigen Struktur, das heißt der Oberschale des äußeren Spoilerelementes 20A des Seitenspoilers 20 angeordnet ist und im Ausführungsbeispiel durch mindestens eine Klebeverbindung K1 fest mit den Innenwandungen der aufgespreizten Oberschale des Seitenspoilers 20 verbunden ist. Es versteht sich, dass die Klebeverbindung K1 nur eine von vielen Möglichkeiten zur Befestigung des Steckelementes 21 in dem Seitenspoiler 20 ist.

Das Steckelement 21 weist ein Basisteil 21.1 auf, welches vorzugsweise einstückig in die innere Tragstruktur 20B des Seitenspoilers 20 übergeht. Mit anderen Worten, das Steckelement 21 ist an der inneren Tragstruktur 20B einstückig angeordnet, vorzugsweise angespritzt und ragt stirnseitig gemäß Figur 1B aus dem Bauraum der Oberschale des Seitenspoilers 20 heraus, welche die innere Tragstruktur 20B des Seitenspoilers 20 zumindest teilweise, insbesondere im oberen Bereich des Seitenspoilers 20 umgibt, wie aus Figur 1C deutlich wird.

Im Ausführungsbeispiel ist die Tragstruktur 20B (nicht dargestellt) des Seitenspoilers 20 beziehungsweise gemäß Figur 1B das Basisteil 21.1 des Steckelementes 21 mit der Oberschale des Seitenspoilers 20 verklebt.

An das Basisteil 21.1 schließt sich ein Glied 21.2 an, welches endseitig das eigentliche Steckteil - eine Steckzunge 21.3 - ausbildet, die zur mechanischen Verbindung gegenüber dem Heckspoiler 10 dient.

Insbesondere ist in Figur 1C verdeutlicht, dass die Steckzunge 21.3 und eine in der gleichen Ebene (quer zur z-Richtung) angeordnete Führungszunge 22 gemeinsam an einer Art Schild 21.4 angeordnet sind, welches über das Glied 21.2 zu dem Basisteil 21.1 geführt ist, das seinerseits in die Tragstruktur 20B übergeht beziehungsweise zur Tragstruktur 20B gehört.

Beim Zusammenbau des Heckspoilers 10 mit dem Seitenspoiler 20 kann sowohl die Steckzunge 21.3 als auch die Führungszunge 22 leichtgängig in die Aufnahmeöffnungen 11.2 der Aufnahmelasche 11.1 als auch in die Führungsnut 12.1 des Führungselementes 12 gegebenenfalls unter einer geringfügigen Ausgleichsbewegung der Steckzunge 21.3 in die Aufnahmeöffnungen 11.2 der Aufnahmelasche 11.1 als auch in die Führungsnut 12.1 einfahren.

Die Abstellungen 11 und 12 sind bevorzugt ebenfalls einstückig an das äußere Heckspoilerelement 10A angespritzt und müssen somit in vorteilhafter Weise ebenfalls nicht separat befestigt werden.

Zudem wird in Figur 1D insbesondere deutlich, dass die Führungszunge 22 als auch die Steckzunge 21.3 im vorderen Bereich leicht angeschrägt sind, so dass in weiterer vorteilhafter Weise ein noch sichereres Einfügen gewährleistet ist.

Die formschlüssige Verbindung stellt wie bereits erläutert sicher, dass eine in Z wirkende Kraft, die jeweils mit den Kraftpfeilen in den Figuren 1B und 1C eingetragen ist, nicht in der Lage ist, den Heckspoiler 11, insbesondere das äußere Heckspoilerelement 10A gegenüber der Tragstruktur 10B aus seiner gewünschten Position zu bringen, wobei die Tragstruktur 10B des Heckspoilerelementes 10A an der Basisstruktur 30B der Hecklappe 30B befestigt ist.

Vervollständigend wird darauf hingewiesen, dass der Heckspoiler 10 beispielsweise schalenartig und das äußere Heckspoilerelement 10A und die innere Tragstruktur 10B aufweist, wobei die in Figur 1B dargestellte Oberschale des Heckspoilers 10 als äußeres Heckspoilerelement 10A mit der nicht näher dargestellten Unterschale als Tragstruktur 10B des Heckspoilerelementes 10A verklebt oder in einem Schweißverfahren, insbesondere einem Reib-, Nadel-, Ultraschallschweißen miteinander verbunden ist.

Gerade bei einem solchen schalenartigen Aufbau ist jetzt die Oberschale des Heckspoilers 10 gegenüber der Unterschale des Heckspoilers 10 zusätzlich gegen ein etwaiges Ablösen gesichert.

Die oben zur ersten Befestigungsart erläuterte form- und kraftschlüssige Verbindung des Seitenspoilers 20, insbesondere die mindestens eine Schraubverbindung S der Tragstruktur 20B an der Basisstruktur 30B der Heckklappe 30, die von der Innenseite der Heckklappe 30 aus hergestellt wird, erfolgt hinsichtlich der Montagereihenfolge erst, wenn der Seitenspoiler 20 in den Heckspoiler 10 formschlüssig eingesteckt worden ist.

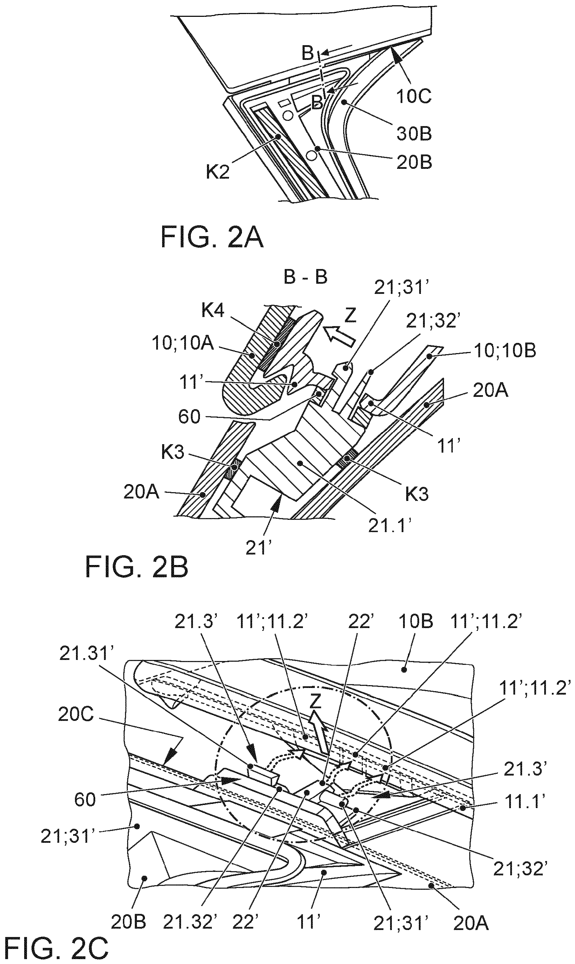

Zweite Ausführungsvariante:
Zur zweiten Ausführungsvariante zeigt die Figur 2A ebenfalls in einer vergrößerten perspektivischen Darstellung wiederum die innere Tragstruktur 20B des Seitenspoilers 20, die bei dieser Ausführungsvariante in einer zweiten Befestigungsart an der Basisstruktur 30B der Heckklappe 30 befestigt ist.

In Figur 2A ist zudem die Schnittlinie B-B eingezeichnet. Als zweite Befestigungsart liegt bei dieser zweiten Ausführungsvariante (im Unterschied zur ersten Ausführungsvariante) eine stoffschlüssige Klebeverbindung K2 zwischen der Tragstruktur 20B des Seitenspoilers 20 und der Basisstruktur 30B der Heckklappe 30 vor, die im Unterschied zu der ersten Befestigungsart an der Außenseite der Heckklappe 30 gebildet wird.

Es versteht sich, dass die zweite Befestigungsart innerhalb der ersten Ausführungsvariante oder die erste Befestigungsart innerhalb der zweiten Ausführungsvariante ebenfalls realisiert werden kann.

Die Figur 2B zeigt in der Schnittdarstellung in Zusammenschau mit der Figur 2C gemäß der Schnittlinie B-B eine weitere bevorzugte Ausgestaltung einer mechanischen Sicherung des Seitenspoilers 20 gegenüber dem Heckspoiler 10 in der zweiten Ausführungsvariante, wobei jetzt mindestens eine Aufnahmeöffnung 11.2` in einem orthogonal abgestellten Rand 11.1' der inneren Tragstruktur 10B angeordnet ist, wobei im Ausführungsbeispiel sogar drei Aufnahmeöffnungen 11.2' (vergleiche Figur 2C) innerhalb der inneren Tragstruktur 10B des Heckspoilers 10 in dem orthogonal abgestellten Rand 11.1' ausgebildet sind, worin ein wesentlicher Unterschied zur ersten Ausführungsvariante besteht.

Die Aufnahmeöffnungen 11.2' sind jedoch wie analog zu der ersten Ausführungsvariante stirnseitig 10C des Heckspoilers 10 angeordnet.

In der Schnittdarstellung der Figur 2B wird deutlich, dass das äußere Heckspoilerelement 10A über eine Verbindung K4, die wiederum bevorzugt als Klebeverbindung ausgebildet ist, mit der inneren Tragstruktur 10B des Heckspoilers 10 verbunden ist.

Innerhalb des Bauraumes der Oberschale des Seitenspoilers 20 ist analog zur ersten Ausführungsvariante ein Steckelement 21' angeordnet.

Das Steckelement 21' umfasst wiederum ein Basisteil 21.1', welches mit den Innenwandungen der den Bauraum aufweisenden Oberschale des Seitenspoilers 20 verbunden, insbesondere mittels einer weiteren Klebeverbindung K3 stoffschlüssig verklebt ist.

Das Steckelement 21' weist ein Basisteil 21.1' auf, welches vorzugsweise einstückig in die innere Tragstruktur 20B des Seitenspoilers 20 übergeht. Mit anderen Worten, das Steckelement 21' ist an der inneren Tragstruktur 20B des Seitenspoilers 20 einstückig angeordnet, vorzugsweise angespritzt und ragt stirnseitig gemäß Figur 2B aus dem Bauraum der Oberschale des Seitenspoilers 20 heraus, welche die innere Tragstruktur 20B des Seitenspoilers 20 zumindest teilweise, insbesondere im oberen Bereich des Seitenspoilers 20 umgibt, wie aus Figur 2C deutlich wird.

An dem Basisteil 21.1' ist in der zweiten Ausführungsvariante analog zu der ersten Ausführungsvariante eine Steckzunge 21.3`, jedoch jetzt mit einer Rastfunktion ausgebildet, wobei die Steckzunge 21.3' ein Steckzungenglied 21.31' mit einem Raststufenelement beziehungsweise einer Raststufe und im Ausführungsbeispiel zusätzlich ein Führungsglied 21.32` aufweist.

Wie in Figur 2C deutlich wird, liegt das Führungsglied 21.32` einseitig in der Aufnahmeöffnung 11.2' an, während das Steckzungenglied 21.31' mit seiner Raststufe die Aufnahmeöffnung 11.2' auf der anderen Seite hintergreift, so dass der Seitenspoiler 20 über die innere Tragstruktur 20B an der inneren Tragstruktur 10B des Heckspoilers 10 reversibel verrastet und somit mechanisch gesichert und klapperfrei angeordnet ist.

In Figur 2C wird deutlich, dass die in Figur 2B dargestellte mechanische Verbindung vorzugsweise in zweifacher Ausbildung angeordnet ist, wobei zwischen diesen beiden Steckzungen 21.3' zusätzlich noch eine Führungszunge 22' ausgebildet ist, die insgesamt etwas länger ausgebildet ist und in die mittlere Aufnahmeöffnung 11.2' zuvorderst eingreift und eine Führung für die seitlichen Steckzungen 21.3' mit dem Rastelement bildet, sobald der Seitenspoiler 20 mit dem Heckspoiler 10 verbunden wird.

Bei der zweiten Ausführungsvariante handelt es sich somit nicht nur um eine mechanische Steckverbindung, sondern es ist eine mechanische Steck- und Rastverbindung ausgebildet, die jedoch ebenfalls reversibel ist, indem bei der Demontage das Steckzungenglied 21.31' mit der angeordneten Raststufe 21.31'mit einem schmalen Werkzeug (welches zwischen die Stirnseiten 10C, 20C eingeführt wird) betätigt wird, und die Raststufe aus der Aufnahmeöffnung 11.2' ausrastet, wonach der Seitenspoiler 20 demontiert werden kann.

Zur Vervollständigung wird noch erwähnt, dass zwischen der Stirnseite 10C des Heckspoilers 10 und der zum Heckspoiler 10 gerichteten Stirnseite des Basisteiles 21.1' ein Pufferelement 60, vorzugsweise in der Art eines Schaumbandes, angeordnet ist, wobei in Figur 2C erkennbar ist, dass dieses Schaumband bei einer mehrfachen Anordnung von Steck-Rastelementen 11', 21' gemäß Figur 2C den gesamten Verbindungsbereich umgibt und abpuffert.

Die oben zur zweiten Befestigungsart erläuterte stoffschlüssige Verbindung des Seitenspoilers 20, insbesondere die mindestens eine Klebeverbindung K2 der Tragstruktur 20B an der Basisstruktur 30B der Heckklappe 30, von der Außenseite der Heckklappe 30 aus, erfolgt hinsichtlich der Montagereihenfolge erst, wenn der Seitenspoiler 20 in den Heckspoiler 10 form- und kraftschlüssig eingesteckt wurde.

In vorteilhafter Weise stehen somit zwei Ausführungsvarianten zur Verfügung, um einen Seitenspoiler 20 gegenüber einem Heckspoiler 30 oder umgekehrt mechanisch zu sichern.

### Bezugszeichenliste

- 10: Heckspoiler
- 10A: äußeres Heckspoilerelement
- 10B: innere Tragstruktur des Heckspoilers
- 10C: Stirnseite des Heckspoilers
- 12: Führungselement
- 12.1: Führungsnut
- 20: Seitenspoiler
- 20A: äußeres Seitenspoilerelement
- 20B: innere Tragstruktur des Seitenspoilers
- 20C: Stirnseite
- 30: Heckklappe
- 30A: äußeres Heckklappenelement der Heckklappe 30
- 30B: Basisstruktur der Heckklappe 30
- 40: Heckscheibe
- 50: Heckbeleuchtung

- -: erste Ausführungsvariante der mechanischen Verbindung
- 11: Aufnahmeelement
- 11.1: Aufnahmelasche
- 11.2: Aufnahmeöffnung
- 21: Steckelement
- 21.1: Basisteil des Steckelementes
- 21.2: Glied des Steckelementes
- 21.3: Steckzunge des Steckelementes
- 21.4: Schild
- 22: Führungszunge
- K1: Klebeverbindung

- -: zweite Ausführungsvariante der mechanischen Verbindung
- 11': Aufnahmeelement
- 11.1': Rand
- 11.2': Aufnahmeöffnung
- 21': Steckelement
- 21.1': Basisteil des Steckelementes
- 21.3': Steckzunge
- 21.31': Steckzungenglied mit Raststufenelement
- 21.32`: Führungsglied
- 22': Führungszunge
- K3: dritte Klebeverbindung
- K4: vierte Klebeverbindung
- 60: Pufferelement

Befestigungsarten des Seitenspoilers 20 an der Basisstruktur 30B der Heckklappe
- S: erste Befestigungsart, Schraubverbindung
- K2: zweite Befestigungsart, Klebeverbindung

## Patentansprüche

1. Heckklappe (30), welche einen Heckspoiler (10) und einen Seitenspoiler (20) umfasst, die mit einer Basisstruktur (30B) der Heckklappe (30) ortsfest verbunden sind, wobei der Heckspoiler (10) gegenüber dem Seitenspoiler (20) und umgekehrt durch eine zusätzliche mechanische Verbindung (11, 21; 11', 21') mechanisch reversibel gesichert angeordnet sind, wobei der Heckspoiler (10) und der Seitenspoiler (20) über ihre Stirnseiten (10C, 20C) miteinander in Verbindung stehen, wobei die zusätzliche mechanische Verbindung (11, 21; 11', 21') mindestens ein Steckelement (21, 21') und mindestens ein Aufnahmeelement (11, 11') umfasst, die wahlweise im Heckspoiler (10) oder dem Seitenspoiler (20) gegenüberliegend ausgebildet und angeordnet sind,
**dadurch gekennzeichnet, dass**
an einer Stirnseite (10C, 20C) des Seitenspoilers (20) das mindestens eine Steckelement (21; 21') in einem Bauraum einer schalenartigen Struktur eines äußeren Seitenspoilerelementes (20A) ausgebildet ist, wobei das mindestens eine Steckelement (21; 21') mit den Innenwandungen einer aufgespreizten Oberschale des Seitenspoilers (20) verbunden ist, wobei eine innere Tragstruktur (20B) des Seitenspoilers (20) mit einem Basisteil (21.1; 21.1') des Steckelementes (21; 21') und mit der Oberschale des Seitenspoilers (20) verbunden ist, wobei die innere Tragstruktur (20B) des Seitenspoilers (20) mit der Basisstruktur (30B) der Heckklappe (30) und das äußere Seitenspoilerelement (20A) fest mit der inneren Tragstruktur (20B) des Spoilers (20) und über das mindestens eine Steckelement (21; 21') mit dem Heckspoiler (10) verbunden sind, da das mindestens eine Steckelement (21; 21') des Seitenspoilers (20) in eine Aufnahmeöffnung (11.2; 11.2`) des Aufnahmeelementes (11, 11`) innerhalb des Heckspoilers (10) eingreift.

2. Heckklappe (30) nach Anspruch 1, **dadurch gekennzeichnet, dass** das mindestens eine Steckelement (21; 21') im Seitenspoiler (20) und das mindestens eine Aufnahmeelement (11; 11') im Heckspoiler (10) angeordnet sind.

3. Heckklappe (30) nach Anspruch 1, **dadurch gekennzeichnet, dass** das mindestens eine Aufnahmeelement (11) eine von einem äußeren Heckspoilerelement (10A) des Heckspoilers (10) orthogonal abgestellte Aufnahmelasche (11.1) ist, welches die Aufnahmeöffnung (11.2) aufweist, wobei das äußere Heckspoilerelement (10A) mit einer inneren Tragstruktur (10B) des Heckspoilers (10) verbunden ist, die mit der inneren Tragstruktur (10B) der Heckklappe (30) und über die Aufnahmeöffnung (11.2) mit dem Seitenspoiler (20) verbunden ist, da das Steckelement (21) des Seitenspoilers (20) in die Aufnahmeöffnung (11.2) des äußeren Heckspoilerelementes (10A) eingreift.

4. Heckklappe (30) nach Anspruch 1, **dadurch gekennzeichnet, dass** das mindestens eine Aufnahmeelement (11') als Aufnahmeöffnung (11.2`) ausgebildet ist, die in einem orthogonal abgestellten Rand (11.1') der inneren Tragstruktur (10B) des Heckspoilers (10) angeordnet ist, wobei die innere Tragstruktur (10B) des Heckspoilers (10) im Zusammenbauzustand mit dem äußeren Heckspoilerelement (10A) des Heckspoilers (10) verbunden ist, und im Zusammenbauzustand zudem über die Aufnahmeöffnung (11.2') im Rand (11.1`) der inneren Tragstruktur (10B) mit dem Seitenspoiler (20) verbunden ist, da das Steckelement (21') des Seitenspoilers (20) in die Aufnahmeöffnung (11.2`) der inneren Tragstruktur (10B) des Heckspoilers (10) eingreift.

5. Heckklappe (30) nach Anspruch 3 oder 4 , **dadurch gekennzeichnet, dass** die orthogonal abgestellte Aufnahmelasche (11.1) des äußeren Heckspoilerelementes (10A) und der orthogonal abgestellten Rand (11.1') der inneren Tragstruktur (10B) des Heckspoilers (10) eine Stirnseite (10C) des Heckspoilers (10) bilden, die im Zusammenbauzustand einer Stirnseite (20C) des Seitenspoilers (20) gegenüberliegt, an der das Steckelement (21, 21') des Seitenspoilers (20) angeordnet ist, welche im Zusammenbauzustand in die Aufnahmeöffnung (11.2) , 11.2') eingreift.

6. Heckklappe (30) nach Anspruch 1, **dadurch gekennzeichnet, dass** das mindestens eine Steckelement (21, 21') zumindest eine Steckzunge (21.3) oder eine Steckzunge (21.3') mit einem Raststufenelement (21.31`) aufweist.

7. Heckklappe (30) nach Anspruch 1, **dadurch gekennzeichnet, dass** dem Steckelement (21, 21') ein Führungselement (22, 22`) zugeordnet ist, welches in eine gegenüberliegende Aufnahmeöffnung (11.2, 11.2') eingreift.

## Claims

1. Tailgate (30) which comprises a rear spoiler (10) and a side spoiler (20) which are connected in a stationary manner to a base structure (30B) of the tailgate (30), the rear spoiler (10) being arranged in a mechanically reversible manner with respect to the side spoiler (20), and vice versa, by way of an additional mechanical connection (11, 21; 11', 21'), the rear spoiler (10) and the side spoiler (20) being connected to one another via the end sides (10C, 20C), the additional mechanical connection (11, 21; 11', 21') comprising at least one plug-element (21, 21') and at least one receiving element (11, 11') which are selectively configured and arranged so as to lie opposite one another in the rear spoiler (10) or the side spoiler (20), **characterized in that** the at least one plug-in element (21; 21') is configured on an end side (10C, 20C) of the side spoiler (20) in an installation space of a shell-like structure of an outer side spoiler element (20A), the at least one plug-in element (21; 21') being connected to the inner walls of an overmoulded upper shell of the side spoiler (20), an inner load-bearing structure (20B) of the side spoiler (20) being connected to a base part (21.1; 21.1') of the plug-in element (21; 21') and to the upper shell of the side spoiler (20), the inner load-bearing structure (20B) of the side spoiler (20) being connected to the base structure (30B) of the tailgate (30), and the outer side spoiler element (20A) being connected fixedly to the inner load-bearing structure (20B) of the spoiler (20) and via the at least one plug-in element (21; 21') to the rear spoiler (10), since the at least one plug-in element (21; 21') of the side spoiler (20) engages into a receiving opening (11.2; 11.2') of the receiving element (11, 11') within the rear spoiler (10).

2. Tailgate (30) according to Claim 1, **characterized in that** the at least one plug-in element (21; 21') is arranged in the side spoiler (20), and the at least one receiving element (11; 11') is arranged in the rear spoiler (10).

3. Tailgate (30) according to Claim 1, **characterized in that** the at least one receiving element (11) is a receiving bracket (11.1) which is set off orthogonally from an outer rear spoiler element (10A) of the rear spoiler (10) and has the receiving opening (11.2), the outer rear spoiler element (10A) being connected to an inner load-bearing structure (10B) of the rear spoiler (10), which inner load-bearing structure (10B) is connected to the inner load-bearing structure (10B) of the tailgate (30) and via the receiving opening (11.2) to the side spoiler (20), since the plug-in element (21) of the side spoiler (20) engages into the receiving opening (11.2) of the outer rear spoiler element (10A).

4. Tailgate (30) according to Claim 1, **characterized in that** the at least one receiving element (11') is configured as a receiving opening (11.2') which is arranged in an orthogonally set-off edge (11.1') of the inner load-bearing structure (10B) of the rear spoiler (10), the inner load-bearing structure (10B) of the rear spoiler (10) being connected in the installed state to the outer rear spoiler element (10A) of the rear spoiler (10), and being additionally connected in the installed state via the receiving opening (11.2') in the edge (11.1') of the inner load-bearing structure (10B) to the side spoiler (20), since the plug-in element (21') of the side spoiler (20) engages into the receiving opening (11.2') of the inner load-bearing structure (10B) of the rear spoiler (10).

5. Tailgate (30) according to Claim 3 or 4, **characterized in that** the orthogonally set-off receiving bracket (11.1) of the outer rear spoiler element (10A) and the orthogonally set-off edge (11.1') of the inner load-bearing structure (10B) of the rear spoiler (10) form an end side (10C) of the rear spoiler (10), which end side (10C) lies opposite an end side (20C) of the side spoiler (20) in the assembled state, on which end side (20C) that plug-in element (21, 21') of the side spoiler (20) is arranged which engages into the receiving opening (11.2, 11.2') in the assembled state.

6. Tailgate (30) according to Claim 1, **characterized in that** the at least one plug-in element (21, 21') has at least one plug-in tongue (21.3) or one plug-in tongue (21.3') with a latching step element (21.31').

7. Tailgate (30) according to Claim 1, **characterized in that** the plug-in element (21, 21') is assigned a guide element (22, 22') which engages into an opposite receiving opening (11.2, 11.2').

## Revendications

1. Hayon arrière (30), qui comprend un déflecteur arrière (10) et un déflecteur latéral (20), qui sont reliés de manière fixe à une structure de base (30B) du hayon arrière (30), le déflecteur arrière (10) étant sécurisé de manière mécaniquement réversible par rapport au déflecteur latéral (20) et inversement par une liaison mécanique supplémentaire (11, 21 ; 11', 21'), le déflecteur arrière (10) et le déflecteur latéral (20) étant reliés entre eux par l'intermédiaire de leurs côtés frontaux (10C, 20C), la liaison mécanique supplémentaire (11, 21 ; 11', 21') comprenant au moins un élément enfichable (21, 21') et au moins un élément de réception (11, 11'), qui sont réalisés et agencés en opposition au choix dans le déflecteur arrière (10) ou le déflecteur latéral (20),
**caractérisé en ce que**
sur un côté frontal (10C, 20C) du déflecteur latéral (20), l'au moins un élément enfichable (21, 21') est réalisé dans un espace de construction d'une structure de type coque d'un élément de déflecteur latéral extérieur (20A), l'au moins un élément enfichable (21 ; 21') étant relié aux parois intérieures d'une coque supérieure élargie du déflecteur latéral (20), une structure porteuse intérieure (20B) du déflecteur latéral (20) étant reliée à une partie de base (21.1 ; 21.1') de l'élément enfichable (21 ; 21') et à la coque supérieure du déflecteur latéral (20), la structure porteuse intérieure (20B) du déflecteur latéral (20) étant reliée à la structure de base (30B) du hayon arrière (30) et l'élément de déflecteur latéral extérieur (20A) étant relié de manière fixe à la structure porteuse intérieure (20B) du déflecteur (20) et, par l'intermédiaire de l'au moins un élément enfichable (21 ; 21'), au déflecteur arrière (10), puisque l'au moins un élément enfichable (21 ; 21') du déflecteur latéral (20) s'engage dans une ouverture de réception (11.2 ; 11.2') de l'élément de réception (11, 11') à l'intérieur du déflecteur arrière (10) .

2. Hayon arrière (30) selon la revendication 1, **caractérisé en ce que** l'au moins un élément enfichable (21 ; 21') est agencé dans le déflecteur latéral (20) et l'au moins un élément de réception (11 ; 11') est agencé dans le déflecteur arrière (10).

3. Hayon arrière (30) selon la revendication 1, **caractérisé en ce que** l'au moins un élément de réception (11) est une patte de réception (11.1) placée orthogonalement par rapport à un élément de déflecteur arrière extérieur (10A) du déflecteur arrière (10), qui présente l'ouverture de réception (11.2), l'élément de déflecteur arrière extérieur (10A) étant relié à une structure porteuse intérieure (10B) du déflecteur arrière (10), qui est reliée à la structure porteuse intérieure (10B) du hayon arrière (30) et, par l'intermédiaire de l'ouverture de réception (11.2), au déflecteur latéral (20), puisque l'élément enfichable (21) du déflecteur latéral (20) s'engage dans l'ouverture de réception (11.2) de l'élément de déflecteur arrière extérieur (10A) .

4. Hayon arrière (30) selon la revendication 1, **caractérisé en ce que** l'au moins un élément de réception (11') est réalisé sous forme d'ouverture de réception (11.2') qui est agencée dans un bord (11.1') placé orthogonalement de la structure porteuse intérieure (10B) du déflecteur arrière (10), la structure porteuse intérieure (10B) du déflecteur arrière (10), à l'état assemblé, étant reliée à l'élément de déflecteur arrière extérieur (10A) du déflecteur arrière (10), et à l'état assemblé, étant en outre reliée par l'intermédiaire de l'ouverture de réception (11.2') dans le bord (11.1') de la structure porteuse intérieure (10B) au déflecteur latéral (20), puisque l'élément enfichable (21') du déflecteur latéral (20) s'engage dans l'ouverture de réception (11.2') de la structure porteuse intérieure (10B) du déflecteur arrière (10).

5. Hayon arrière (30) selon la revendication 3 ou 4, **caractérisé en ce que** la patte de réception (11.1) placée orthogonalement de l'élément de déflecteur arrière extérieur (10A) et le bord (11.1') placé orthogonalement de la structure porteuse intérieure (10B) du déflecteur arrière (10) forment un côté frontal (10C) du déflecteur arrière (10) qui, à l'état assemblé, est opposé à un côté frontal (20C) du déflecteur latéral (20) sur lequel est agencé l'élément enfichable (21, 21') du déflecteur latéral (20) qui, à l'état assemblé, s'engage dans l'ouverture de réception (11.2, 11.2').

6. Hayon arrière (30) selon la revendication 1, **caractérisé en ce que** l'au moins un élément enfichable (21, 21') présente au moins une languette d'enfichage (21.3) ou une languette d'enfichage (21.3') avec un élément de gradin d'encliquetage (21.31').

7. Hayon arrière (30) selon la revendication 1, **caractérisé en ce que** l'élément enfichable (21, 21') est associé à un élément de guidage (22, 22') qui s'engage dans une ouverture de réception (11.2, 11.2') opposée.
